# EUROPÄISCHE PATENTSCHRIFT

(11) **EP 1 467 879 B1**
(45) Veröffentlichungstag und Bekanntmachung des Hinweises auf die Patenterteilung: **26.09.2007**
(21) Anmeldenummer: 03711863.5
(22) Anmeldetag: 13.01.2003
(51) Int. Cl.: B60H 1/00, F25B 47/02

(54) **HEIZ-/KÜHLKREISLAUF FÜR EINE KLIMAANLAGE EINES KRAFTFAHRZEUGS, KLIMAANLAGE UND VERFAHREN ZUR STEUERUNG DERSELBEN**
HEATING/COOLING CIRCUIT FOR AN AIR-CONDITIONING SYSTEM OF A MOTOR VEHICLE, AIR-CONDITIONING SYSTEM AND A METHOD FOR CONTROLLING THE SAME
CIRCUIT DE CHAUFFAGE/REFROIDISSEMENT POUR SYSTEME DE CLIMATISATION D'AUTOMOBILE, SYSTEME DE CLIMATISATION ET PROCEDE POUR LE REGULER

(30) Priorität: 14.01.2002 DE 10201207; 15.01.2002 DE 10201408
(43) Veröffentlichungstag der Anmeldung: 20.10.2004
(73) Patentinhaber: Behr GmbH & Co. KG, 70469 Stuttgart (DE)
(72) Erfinder: FEUERECKER, Günther, 70567 Stuttgart (DE)
(74) Vertreter: Grauel, Andreas
(86) Internationale Anmeldenummer: PCT/EP2003/000228
(87) Internationale Veröffentlichungsnummer: WO 2003/057518

(56) Entgegenhaltungen:
- DE-A- 19 644 583
- US-A- 4 974 418
- US-A1- 2001 003 311
- US-B1- 6 212 900
- US-B1- 6 314 750

## Beschreibung

Die Erfindung betrifft einen Heiz-/Kühlkreislauf für ein Kraftfahrzeug gemäß dem Oberbegriff des Anspruches 1, eine diesen enthaltende Klimaanlage und ein Verfahren zur Regelung der Klimaanlage.

Aus der JP-A-4-278153 ist ein Heiz-/Kühlkreislauf für eine Klimaanlage mit einem Enteisungsbetrieb bekannt, wobei die Enteisung derart durchgeführt wird, dass der Öffnungsgrad eines Expansionsventils erhöht wird und die Menge an Luft, die einem Innenraum-Wärmetauscher zugeführt wird, verringert wird. In diesem Fall wirken, da der Öffnungsgrad des Expansionsventils erhöht wird, sowohl der Innenraum-Wärmetauscher als auch der Außenwärmetauscher als Kondensatoren. Ferner wird, da die Menge an Luft, die dem Innenraum-Wärmetauscher zugeführt wird, verringert wird, die abgestrahlte Wärmemenge beim Innenraum-Wärmetauscher reduziert und folglich wird entsprechend die abgestrahlte Wärme beim Außenwärmetauscher erhöht, wodurch das Eis geschmolzen wird, während der Fahrgast - Innenraum durch den Innenraum-Wärmetauscher weiter geheizt wird, wenn auch mit verringerter maximaler Leistung.

Aus der JP-A-5-77636 ist ein Heiz-/Kühlkreislauf für eine Klimaanlage mit einem Innenraum-Wärmetauscher, der als Kondensator dient, und einem Außenwärmetauscher, der als Verdampfer bei einem Heizbetrieb dient, um den Fahrgast-Innenraum zu heizen, bekannt. Bei einem Abtau-Betrieb für den Außenwärmetauscher wird durch das Öffnen eines Bypasses ein Teil des Kältemittels direkt von einem Kompressor an den Außenwärmetauscher abgegeben, um auf diese Weise den Innenraum-Wärmetauscher und ein Expansionsventil zu umgehen. Auf diese Weise wirkt der Außenwärmetauscher als Kondensator und das Eis wird durch die Kondenswärme im Außenwärmetauscher geschmolzen. Hierdurch wird die Wärmeleistung des Innenraum-Wärmetauschers verringert.

Bei beiden o.g. japanischen Druckschriften wird die Wärmeleistung des Innenraum-Wärmetauschers reduziert, wenn auch eine Reduzierung der Temperatur im Fahrgast-Innenraum minimiert wird. Im Falle eines Dauerbetriebes der Klimaanlage hat der Abtau-Betrieb nur geringen Einfluss, jedoch wirkt sich ein Abtau-Betrieb von bspw. 30 Minuten bei einer Klimaanlage eines Kraftfahrzeuges aus, welche bspw. nur eine Stunde betrieben wird, so dass eine gewisse Temperaturreduzierung im Fahrgastraum erfolgt.

Gemäß einem in der EP 0 788 910 A2 offenbarten Heiz-/Kühlkreislauf für eine Klimaanlage in einem Kraftfahrzeug wird ein Verzögerungs-Betrieb beschrieben, bei dem die Ablagerung von Eis am Außenwärmetauscher verzögert wird, wodurch die Heizdauer verlängert und ein Abtau-Betrieb hinausgezögert werden kann.

Im US-Patent US 6,3147,50 B1 werden Wärmepumpen beschrieben, die einen in einem Klimagerät angeordneten Heizkörper, einen Außenwärmetauscher sowie einen - ebenfalls im Klimagerät angeordneten - inneren Verdampfer aufweisen, die in dieser Reihenfolge von einem Kältemittel durchströmt werden. Zwischen innerem Heizkörper und Außenwärmetauscher sowie zwischen Außenwärmetauscher und Verdampfer sind Expansionsventile angeordnet, die über mit elektrisch schaltbaren Ventilen versehene Bypassleitungen überbrückt werden können. Je nach Stellung dieser Schaltventile kann die in US 6,314,750 B1 beschriebene Klimaanlage in einem Heizbetrieb, einem Kühlbetrieb und einem Entfeuchtungsbetrieb betrieben werden. Darüber hinaus wird ein Abtau-Betrieb für den Außenwärmetauscher vorgeschlagen, bei dem der Außenwärmetauscher dadurch beheizt wird, dass er im Rahmen eines üblichen Kältemittelumlaufs als Kondensator verwendet wird.

US 6 212 900 B1 beschreibt als nächster Stand der Technik einen Heiz/ Kühlkreislauf gemäß dem Oberbegriff des Anspruchs 1.

Derartige Klimaanlagen lassen noch Wünsche, insbesondere in Hinblick auf die Dauer des Abtau-Betriebes, offen.

Es ist Aufgabe der Erfindung die vorgenannten Nachteile zu vermeiden oder zumindest zu reduzieren und einen verbesserten Heiz-/Kühlkreislauf für eine Klimaanlage eines Kraftfahrzeuges bereitzustellen, sowie ein Verfahren zur Regelung der Klimaanlage.

Diese Aufgabe wird gelöst durch einen Gegenstand mit den Merkmalen des Anspruchs 1, eine Klimaanlage mit den Merkmalen des Anspruchs 16 und ein Verfahren nach Anspruch 17.

Es wird ein Heiz-/Kühlkreislauf für ein Kraftfahrzeug mit einem Verdampfer zur Abkühlung von einem Innenraum zuzuführender Luft, einem Heizwärmetauscher zur Aufheizung der dem Innenraum zuzuführenden Luft, einem Außenwärmetauscher, mit einem Kompressor zum Fördern von Kältemittel, einem ersten Expansionsorgan, das dem Verdampfer zugeordnet ist, einem zweiten Expansionsorgan, das dem Außenwärmetauscher zugeordnet ist und Kältemittelleitungen, über welche die vorgenannten Komponenten miteinander verbunden sind vorgeschlagen, wobei ein Abtau-Kreislauf schaltbar ist, der den Kompressor, den Außenwärmetauscher und das zweite Expansionsorgan umfasst und den Heizwärmetauscher, den Verdampfer und das erste Expansionsorgan umgeht. Dazu ist eine absperrbare Heizbypassleitung zur kältemittelseitigen Umgehung des Heizwärmetauschers und eine absperrbare Kühlbypassleitung zur kältemittelseitigen Umgehung des Verdampfers und des ersten Expansionsorgans vorgesehen. Die im Heiz-/Kühlkreislauf vorgesehene absperrbare Heizbypassleitung zur kältemittelseitigen Umgehung des Heizwärmetauschers wird durch ein Ventil geöffnet, welches ausschließlich im Abtau-Betrieb offen ist. Die Leitung führt das vom Kompressor kommende Kältemittel dem Expansionsorgan zu. Durch eine derartige Abtau-Schaltung durchläuft das Kältemittel zuerst eine Druckerhöhung im Kompressor und nachfolgend, ggf. auch vor einer Expansion, eine Wärmeabgabe im vereisten Außenwärmetauscher. Hierbei wird der Außenwärmetauscher im durch die Abtau-Schaltung durchgeführten Abtau-Betrieb vom umlaufenden Kältemittel geheizt. Auf diese Weise kann der vereiste Außenwärmetauscher schnell aufgetaut werden, insbesondere wenn die Anforderungen der Motorkühlung durch eine wegen Vereisung reduzierte Luftmenge nicht erfüllt werden können.

Vorzugsweise ist das zweite Expansionsorgan dem Kompressor nachgeschaltet. Hierbei ist vorzugsweise das zweite Expansionsorgan dem Außenwärmetauscher vorgeschaltet. Da der Saugdruck im wesentlichen durch die kälteste Stelle im Abtau-Kreislauf festgelegt wird, wird dieser in diesem Fall durch den vereisten Außenwärmetauscher bestimmt, so dass eine höhere Abtau-Leistung als im Falle einer Anordnung des Außenwärmetauschers vor dem Expansionsorgan möglich ist. Hierfür wird im Abtau-Betrieb das Kältemittel im Kompressor verdichtet, zum Expansionsorgan geleitet und dort entspannt und gibt seine Wärme im Außenwärmetauscher ab, wobei die Wärme Eis, das sich im Außenwärmetauscher befindet, abtaut.

Vorzugsweise ist das zweite Expansionsorgan, insbesondere kontinuierlich, regelbar und kann elektrisch angesteuert werden.

Um die Leistungen der Wärmetauscher noch besser an der Bedarf anpassen zu können, ist bevorzugt auch die Kompressorleistung durch Verstellung des Hubvolumens oder der Kompressordrehzahl regelbar.

Vorzugsweise ist ein Sensor in der Luft vor dem Außenwärmetauscher vorgesehen, wobei dieser Sensor vorzugsweise die Außentemperatur der Luft ermittelt. Dies kann vorzugsweise direkt vor dem Außenwärmetauscher erfolgen, jedoch auch an beliebigen anderen Stellen, an denen keine durch Einflüsse wesentlich veränderte Außentemperatur gemessen werden kann, wie bspw. am Ansaugtrakt der Klimaanlage. Bei dem Sensor handelt es sich vorzugsweise um einen Temperatursensor.

Vorzugsweise ist ein Sensor am Kältemittel nach dem Außenwärmetauscher, insbesondere im niederdruckseitigen Bereich, d.h. irgendwo zwischen dem Austritt des Außenwärmetauschers, dem Austritt des Verdampfers und dem Eintritt in den Kompressor, vorgesehen. Dieser Sensor kann bspw. die Temperatur des Kältemittels ermitteln. Gemäß einer Alternative kann der Sensor den Druck ermitteln, welcher in engem Zusammenhang mit der Temperatur steht.

Der Heiz-/Kühlkreislauf umfasst vorzugsweise eine Regelungsvorrichtung, die in Abhängigkeit von der mittels der Temperatursensoren ermittelten Temperaturen den Heiz-/Kühlkreislauf regelt, d.h. bei Bedarf in den Abtau-Betrieb und/oder wieder zurück in den Normalbetrieb schaltet.

Bevorzugt wird als Kältemittel für den erfindungsgemäßen Heiz- oder Kühlkreislauf CO₂ eingesetzt, da CO₂ optimal für einen Wärmepumpenbetrieb, wie er mit dem erfindungsgemäßen Kreislauf durchführbar, geeignet ist. Bei Einsatz von CO₂ als Kältemittel ist bevorzugt ein innerer Wärmetauscher zum Austausch von Wärme zwischen einem hochdruckseitigen und einem niederdruckseitigen Abschnitt des Heiz-/Kühlkreislaufs vorgesehen. Der Einsatz des Kältemittels CO₂ hat zur Folge, dass ein Teil der Betriebspunkte bei überkritischen Zuständen liegen, so dass die Wärmeabgabe oft ohne Kondensation erfolgt.

Um die Kältemitteldruckverluste innerhalb der Leitungen und Wärmetauscher so gering wie möglich zu halten und im Kühl- bzw. Heizbetrieb den entsprechend den Bedingungen optimale Betriebspunkt einstellen zu können, ist eine absperrbare Heizbypassleitung zur kältemittelseitigen Umgehung des Heizwärmetauschers und des dem Außenwärmetauscher zugeordneten Expansionsorgans sowie eine absperrbare Kühlbypassleitung zur Umgehung des Verdampfers und des zugeordneten Expansionsorgans vorgesehen. Weiterhin lassen sich so die Komponenten Verdampfer oder Heizwärmetauscher, falls ihre Funktion nicht benötigt wird oder sogar nachteilig wäre, komplett ausschalten.

Damit sich im Kühlbetrieb, wenn ausschließlich der Verdampfer arbeitet und die dem Fahrzeuginnenraum zuzuführende Luft abkühlt, kein Kältemittel in dem Heizwärmetauscher, der durch die vom Verdampfer abgekühlte Luft zwingendermaßen auch abgekühlt wird, da die Luft diesen durchströmt, ansammelt, ist eine drosselbare Leitung zwischen einer mit dem Heizwärmetauscher verbundenen Leitung und einer Leitung auf dem niedrigem Druckniveau des Verdampfers vorgesehen.

Im Folgenden wird die Erfindung anhand eines Ausführungsbeispiels unter Bezugnahme auf die Zeichnung im Einzelnen erläutert. In der Zeichnung zeigen:
- Fig. 1: einen erfindungsgemäßen Heiz-/Kühlkreislauf im Betriebsmodus Kühlen;
- Fig. 2: den erfindungsgemäßen Heiz-/Kühlkreislauf im Betriebsmodus Heizen;
- Fig. 3: den erfindungsgemäßen Heiz-/Kühlkreislauf im Betriebsmodus Reheat;
- Fig. 4: den erfindungsgemäßen Heiz-/Kühlkreislauf im Betriebsmodus Abtauen.

Ein erfindungsgemäßer Heiz-/Kühlkreislauf 10 für eine Klimaanlage eines Kraftfahrzeuges weist einen in einem Klimagerät 12, das in der Regel in einer Armaturentafel des Kraftfahrzeuges angeordnet ist, angeordneten Verdampfer 14 und einen luftseitig dem Verdampfer 14 nachgeordneten Heizwärmetauscher 16 auf. Über ein Gebläse (nicht dargestellt) kann Umluft oder Frischluft durch das Klimagerät 12 gefördert werden, wie durch einen Pfeil dargestellt ist, wobei die Luft im Verdampfer 14 abgekühlt und im Heizwärmetauscher 16 erwärmt werden kann. Optional ist luftseitig vor oder nach dem Heizwärmetauscher 16 ein weiterer Heizwärmetauscher 20 angeordnet, der über Kühlmittelleitungen K mit einem nicht dargestellten Antriebsaggregat des Kraftfahrzeuges verbunden ist, so dass heißes Kühlmittel den Heizwärmetauscher durchströmen kann. Die Funktion dieses Heizwärmetauschers 16 kann beispielsweise durch ein Heiz-Regelventil 40 oder auch mit Hilfe von Klappen (nicht dargestellt), mit denen die Luft in gewünschtem Verhältnis zum Heizwärmetaüscher 16 geführt oder daran vorbeigeführt wird, bedarfsgerecht gesteuert werden. Die im Klimagerät 12 temperierte Luft kann über geeignete Ausströmer dem Fahrzeuginnenraum zugeführt werden.

Neben dem Verdampfer 14 und dem Heizwärmetauscher 16 weist der Heiz-/Kühlkreislauf 10 einen Außenwärmetauscher 22 und einen Kompressor 24 auf. Diese Komponenten des Heiz-/Kühlkreislaufes sind über Kältemittelleitungen L₁ bis L₁₂ in unten beschriebener Weise miteinander verbunden. Eingangsseitig des Kompressors 24 ist in der Leitung L₇ ein Kältemittelsammler 26 vorgesehen.

Dem Verdampfer 14 ist eingangsseitig ein erstes Expansionsorgan 28 zugeordnet und dem Außenwärmetauscher 22 ist eingangsseitig ein weiteres Expansionsorgan 30 zugeordnet. Beide Expansionsorgane 28 und 30 sind bevorzugt elektrisch ansteuerbar und kontinuierlich regelbar. Des weiteren sind Ventile 32, 34, 36, 38, 40 und 44 vorgesehen, deren Funktionen weiter unten beschrieben werden. Hierbei handelt es sich bei den Ventilen 32, 34, 36, 44 um Schaltventile, die vorzugsweise elektrisch ansteuerbar sind. Beim Ventil 38 handelt es sich vorzugsweise um eine Drossel. Die Ventile 32, 34, 44 können auch eine bauliche Einheit bilden (ein sogenanntes 4/3-WegeVentil), wobei Bauraum- und Kostenvorteile entstehen können.

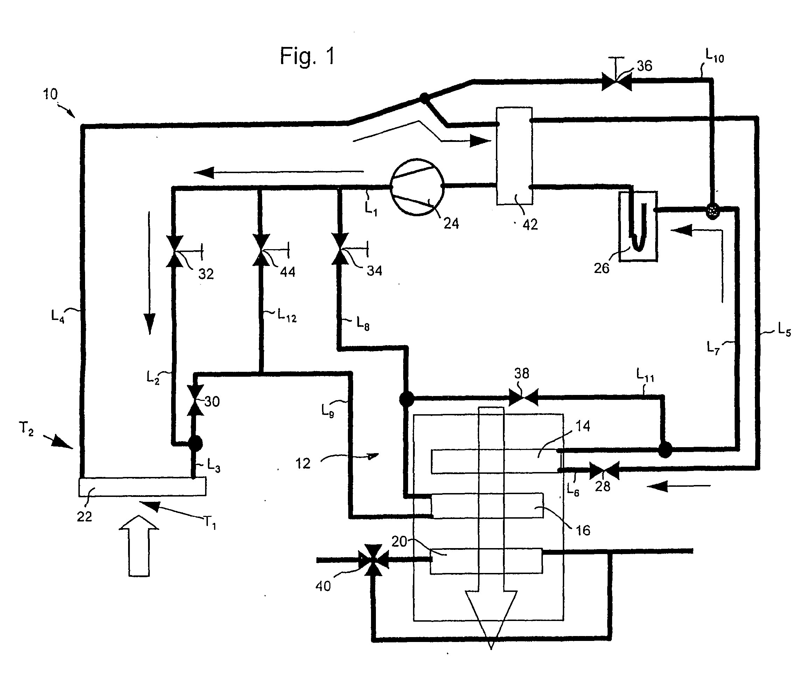

Im Kühlbetrieb (Fig. 1), wenn also die dem Fahrzeuginnenraum zuzuführende Luft ausschließlich gekühlt werden soll, ist der Heiz-/Kühlreislauf 10 wie folgt verschaltet:

Ausgehend vom Kompressor 24 wird das Kältemittel über die Leitungen L₁, L₂ und L₃ dem Außenwärmetauscher 22 zugeführt. Dazu ist das Ventil 32 geöffnet und die Ventile 34 und 44 geschlossen. Im Außenwärmetauscher 22 wird das als Heißgas vorliegende Kältemittel abgekühlt. Vom Außenwärmetauscher 22 strömt das Kältemittel über die Leitungen L₄ und L₅ zum ersten Expansionsorgan 28. Bei Durchströmen des Expansionsorgan 28 entspannt das Kältemittel und wird über die Leitung L₆ dem Verdampfer 14, in dem das Kältemittel verdampft und somit der zu kühlenden Luft Wärme entzieht, zugeführt. Über eine Leitung L₇ wird das Kältemittel über den Kältemittelsammler 26 zurück zum Kompressor 24 geführt. In einem inneren Wärmetauscher 42 erfolgt, zur Erhöhung der Leistung, ein Wärmeaustausch zwischen einem hochdruckseitigen Abschnitt (Leitung L₅) und einem niederdruckseitigen Abschnitt (Leitung L₇) statt, wobei im vorliegende Fall Wärme vom hochdruckseitigen Abschnitt an den niederdruckseitigen Abschnitt abgegeben wird.

Im Kühlbetrieb ist der Heizwärmetauscher 16 nicht im Betrieb, und das Kältemittel wird über die Leitung L₂ an diesem und dem zweiten Expansionsorgan 30 vorbeigeführt wird, so dass die Leitung L₂ als Heizbypassleitung eingesetzt ist.

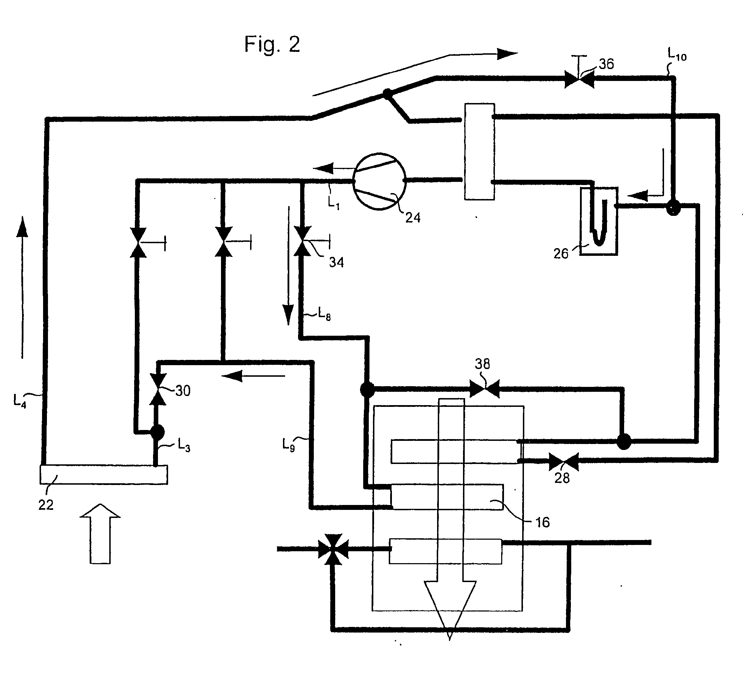

Im Heizbetrieb (Fig. 2), wenn die dem Fahrzeuginnenraum zuzuführende Luft ausschließlich aufgeheizt werden soll, ist der Verdampfer 14 außer Betrieb und der Heizwärmetauscher 16 in Betrieb. Der Heiz-/Kühlkreislauf 10 arbeitet dann als Wärmepumpe. Das Kältemittel wird vom Kompressor 24 über die Leitungen L₁ und L₈ als Heißgas dem Heizwärmetauscher 16 zugeführt, in dem das Kältemittel Wärme abgibt und dabei die Zuluft aufheizt. Das Kältemittel wird über eine Leitung L₉ dem zweiten Expansionsorgan 30 zugeführt und dort entspannt. Über eine Leitung L₃ wird das Kältemittel dem Außenwärmetauscher 22 zugeführt, der jetzt als Verdampfer betreibbar ist, in dem das Kältemittel verdampft und der Außenluft Wärme entzieht. Über Leitungen L₄, L₁₀ (sowie gegebenenfalls in kleinem Umfang L₇) wird das Kältemittel wieder dem Kompressor 24 zugeführt. Die Leitung L₁₀, die über ein Ventil 36 absperrbar ist, dient in dem Heizbetrieb als Kühlbypassleitung zur kältemittelseitigen Umgehung des Verdampfers 14. Der innere Wärmetauscher 42 ist im Heizbetrieb ohne Funktion.

Zusätzlich kann im Heizbetrieb der weitere Heizwärmetauscher 20 betrieben werden, indem ein Heiz-Regeiventil 40 entsprechend geöffnet wird, so dass heißes Kühlmittel von dem Antriebsaggregat zum Heizwärmetauscher 20 strömen kann.

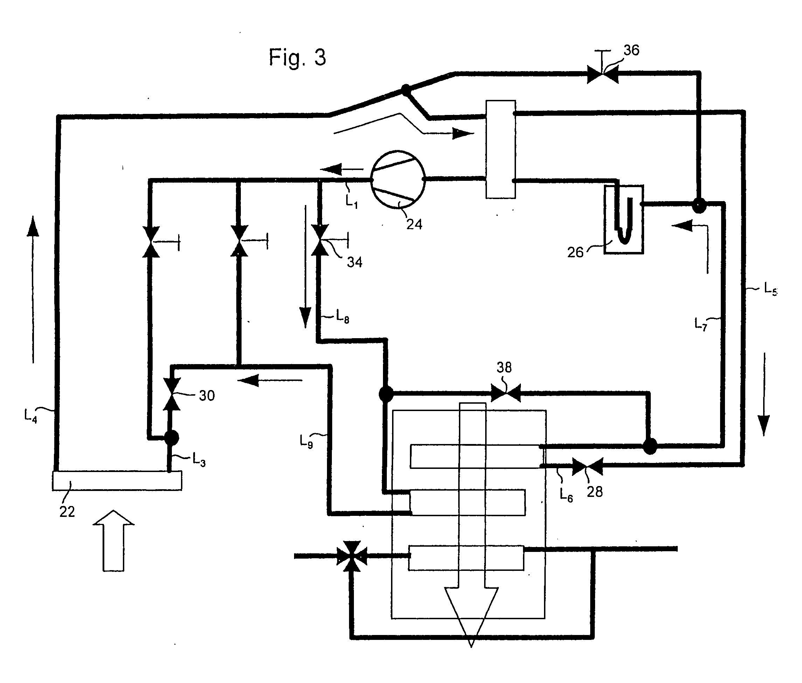

Im Reheat-Betrieb (Fig. 3), der zum Entfeuchten und Erwärmen der dem Fahrzeuginnenraum zuzuführenden Luft dient, sind sowohl der Verdampfer 14 als auch der Heizwärmetauscher 16 in Betrieb, so dass die Luft zunächst im Verdampfer 14 abkühlen kann und die in der Luft enthaltene Feuchtigkeit auskondensieren kann. Bevor die Luft dem Fahrzeuginnenraum zugeführt wird, kann sie im Heizwärmetauscher 16 und optional auch in dem weiteren Heizwärmetauscher 20 wieder erwärmt werden.

Das Kältemittel wird im Reheat-Betrieb ausgehend vom Kompressor 24 über die Leitungen L₁ und L₈ dem Heizwärmetauscher 16 zugeführt, so dass im Heizwärmetauscher 16 das Kältemittel Wärme an die Luft abgeben kann. Über die Leitung L₉ wird das Kältemittel zum Expansionsorgan 30 geführt. Dieses kann es je nach dessen Einstellung ohne wesentlichen Druckverlust passieren, oder aber auf einen vorteilhaften Druck gedrosselt werden. Über die Leitung L₃ wird das Kältemittel zum Außenwärmetauscher 22 geführt. Je nach Einstellung des Zwischendruckes entzieht das Kältemittel im Außenwärmetauscher 22 der Außenluft Wärme oder gibt Wärme an die Außenluft ab. Vom Außenwärmetauscher 22 wird das Kältemittel über die Leitungen L₄, L₅ dem Expansionsorgan 28 und über die Leitung L₆ dem Verdampfer 14 zugeführt. Vom Verdampfer 14 wird das Kältemittel über die Leitungen L₇ wieder zum Kompressor 24 zurückgeführt.

Je nach Feuchtigkeitsgehalt und Temperatur der Luft wird zur gewünschten Entfeuchtung eine bestimmte Kühlleistung am Verdampfer 14 benötigt. Weiterhin wird abhängig davon, ob der Innenraum eines Fahrzeugs zu Fahrtbeginn noch kalt ist oder sich bereits während der Fahrt aufgeheizt hat eine sehr unterschiedliche Heizleistung zur anschließenden Erwärmung der Luft auf ein komfortables Niveau benötigt. Durch Variation der Expansionsorgane 28, 30 lässt sich der Druck im Außenwärmetauscher 22 idealerweise zwischen dem Druck am Verdampfer 14 und dem Hochdruck am Heizwärmetauscher 16 einstellen, wobei zu beachten ist, dass auch der Hochdruck am Heizwärmetauscher 16 neben dem Fördervolumen des Kompressors 24 insbesondere von der Stellung der Expansionsorgane 28 und 30 abhängig ist und auf einen für die entsprechenden Rahmenbedingungen vorteilhaften Wert eingestellt werden muss. Die Expansionsorgane 28 und 30 können deshalb nicht unabhängig voneinander eingestellt werden. Ist der Druck im Außenwärmetauscher hoch, d.h. ist das Expansionsorgan 30 weit geöffnet und das Expansionsorgan 28 weit geschlossen, so gibt der Außenwärmetauscher Wärme ab und das Verhältnis zwischen Heizleistung des Wärmetauschers 16 und Kühlleistung des Verdampfers 14 ist klein. Eine solche Einstellung ist also vorteilhaft bei kleinem Heizbedarf.

Wird dagegen das Expansionsorgan 30 zunehmend geschlossen und das Expansionsorgan 28 zunehmend geöffnet, so wird der Druck im Außenwärmetauscher 22 immer kleiner und die abgegebene Wärmeleistung des Außenwärmetauschers 22 sinkt. Dies hat eine sinkende spezifische Kälteleistung im Verdampfer 14 zur Folge. Damit steigt das Verhältnis von Heizleistung im Heizwärmetauscher 16 und Kälteleistung im Verdampfer 14.

Wenn der Druck im Außenwärmetauscher 22 so klein wird, dass die ihm zugeordnete Siedetemperatur des Kältemittels die Temperatur der außen anliegenden Luft unterschreitet, so wirkt der Außenwärmetauscher jetzt als Verdampfer und nimmt Wärme aus der Umgebung auf. Dies führt zu einer weiteren Verkleinerung der spezifischen Kälteleistung im Verdampfer 14.

Das Verhältnis von Heizleistung im Heizwärmetauscher 16 und Kälteleistung im Verdampfer 14 steigt also mit sinkendem Druck im Außenwärmetauscher 22.

Um das Kühl- und Heizleistungsangebot an den aktuellen Bedarf anzupassen, müssen die Expansionsorgane 28 und 30 so eingestellt werden, dass sich zum einen ein für die Gesamtleistung vorteilhafter Hochdruck am Heizwärmetauscher 16 einstellt und gleichzeitig ein für das Verhältnis von Kühl- und Heizleistung passendes Druckniveau im Außenwärmetauscher 22 herrscht. Die Gesamtleistung kann über das Fördervolumen des Kompressors 24 oder auch in gewissen Grenzen über die Wahl des Druckniveaus im Heizwärmetauscher 16 eingestellt werden.

Bevorzugt ist das zweite Expansionsorgan 30 absperrbar, so dass im Kühlbetrieb kein Kältemittel von der Leitung L₃ in die Leitung L₉ und damit den Heizwärmetauscher 16 gelangen kann. Alternativ kann diese Absperrung durch ein vor oder nach das Expansionsorgan 30 angeordnetes Rückschlagventil oder eine Rückschlagklappe erfolgen.

Bevorzugt ist auch das erste Expansionsorgan 28 absperrbar, so dass im Heizbetrieb kein Kältemittel unter hohem Druck von der Leitung L₅ in die Leitung L₆ und damit den Verdampfer 14 gelangen kann.

Wenn im Kühlbetrieb ausschließlich der Verdampfer 14 in Betrieb ist, wird die im Verdampfer 14 abgekühlte Luft den luftseitig nachgeordneten Heizwärmetauscher 16 abkühlen, wodurch es vorkommen kann, dass sich im Laufe der Zeit im Heizwärmetauscher 16 und den Kältemittelleitungen L₈ und L₉ Kältemittel ansammelt, das dann im restlichen Kreislauf fehlt. Außerdem könnte es im Stillstand der Anlage bei hohen Temperaturen durch eingeschlossenes Kältemittel zu unzulässig hohen Drücken im Heizwärmetauscher 16 kommen. Um diese Ansammlung zu vermeiden, ist eine über eine Drossel 38 drosselbare Leitung L₁₁ vorgesehen, die eine Verbindung herstellt zwischen einer mit dem Heizwärmetauscher 16 verbundenen Leitung, vorzugsweise der Zulaufleitung L₈ und einer Leitung oder Komponente, die sich auf niedrigem Systemdruck, d.h. zwischen Expansionsorgan 28 und Eintritt des Kompressors 24 - befindet. Im dargestellten Ausführungsbeispiel ist dies die Rücklaufleitung L₇ des Verdampfers 14. Diese Drossel 38 kann durch ein Ventil, wie im Ausführungsbeispiel, eine Engstelle in der Leitung L₁₁ oder Kapillare, einen porösen Körper oder ähnliches dargestellt werden. Um eine Kältemittelansammlung zu vermeiden, kann die Drossel 38 sehr klein dimensioniert werden, so dass kein wesentlicher Einfluss auf die weitere Funktion des Kreislaufs 10 erfolgt.

In einem Betrieb, bei dem die Umgebungsluft als Wärmequelle dient, d.h. wenn im Außenwärmetauscher 22 Wärme von der Umgebungsluft aufgenommen wird (Heizbetrieb, z.T. auch Reheat-Betrieb), besteht die Gefahr eines Vereisens des Außenwärmetauschers 22, da sich durch den Wärmeentzug Luftfeuchtigkeit, d.h. Wasser am Außenwärmetauscher 22 abscheidet, das bei Temperaturen unter 0°C gefriert und den Außenwärmetauscher 22 vereist. Hierdurch wird der Luftstrom, der in den Figuren 1 bis 4 durch einen Pfeil angedeutet ist, beim Durchströmen behindert. Da dieser Luftstrom auch über den Kühlmittelkühler (nicht dargestellt), der die Motorabwärme abführt, strömt, kann eine mangelnde Luftbeaufschlagung des Kühlmittelkühlers, verbunden mit einem ungünstigen Fahrzustand (hohe Last), den Motor durch Überhitzung gefährden, weshalb eine Überwachung des Zustandes des Außenwärmetauschers 22 erforderlich ist. Hierfür wird die Temperaturdifferenz zwischen der Temperatur T₁ der Luft am Eintritt und der Temperatur T₂ des Kältemittels am Austritt des Außenwärmetauschers 22 ermittelt. Eine Vereisung liegt vor, d.h. ein Abtauen des Außenwärmetauschers 22 ist erforderlich, wenn die Temperaturdifferenz zu groß wird. Übliche Anhaltswerte für die Temperaturdifferenz T₁-T₂ sind 5 bis 10K für einen eisfreien Außenwärmetauscher 22 und 10 bis 20K für einen vereisten Außenwärmetauscher 22, wobei jedoch eine Abhängigkeit von der Außentemperatur besteht.

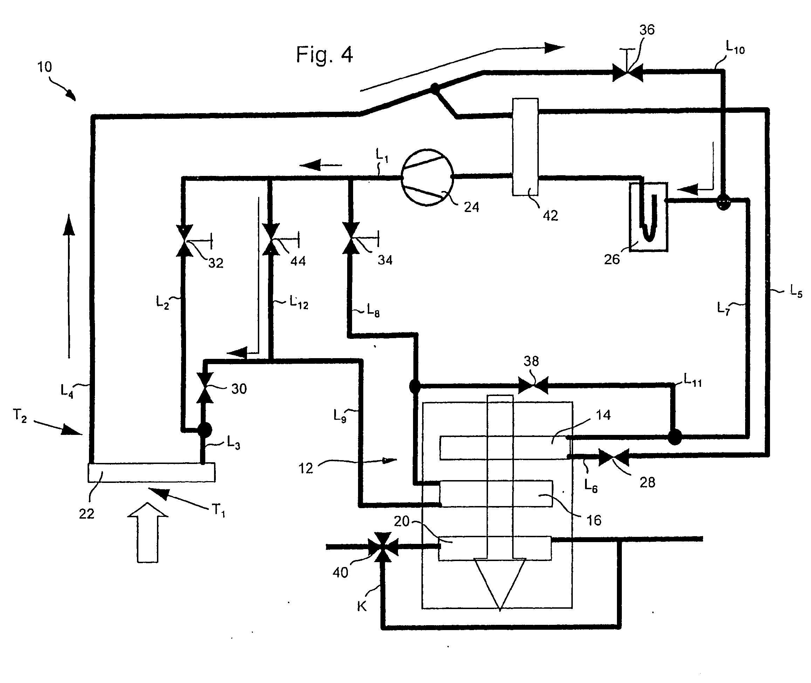

Für den Abtau-Betrieb (Fig. 4) kann der Heiz-/Kühlkreislauf 10 so betrieben werden, dass eine Wärmeabgabe im Außenwärmetauscher 22 erfolgt, damit das Eis wieder entfernt wird, welches sich gebildet hat.

Das Kältemittel wird im Abtau-Betrieb ausgehend vom Kompressor 24 über die Leitungen L₁ und L₁₂ zum Expansionsorgan 30 geführt, wo es auf einen niedrigen Druck entspannt wird. Danach wird es über die Leitung L₃ dem Außenwärmetauscher 22 zugeführt, in dem es seine Wärme abgeben kann, mit welcher das Eis geschmolzen und somit entfernt werden kann. Über die Leitungen L₄ und L₁₀ wird das Kältemittel über den Kältemittelsammler 26 zum - in dieser Betriebsart funktionslosen - inneren Wärmetauscher 42 und Kompressor 24 geführt.

Im Abtau-Betrieb sind die Ventile 36 und 44 offen, während die Ventile 32 und 34 geschlossen sind. Ferner ist das erste Expansionsorgan 28 vorzugsweise geschlossen, und das zweite Expansionsorgan 30 regelt.

Das Ende des Abtau-Vorganges kann folgendermaßen ermittelt werden: Es wird die Temperatur T₂ des Kältemittels am Austritt des Außenwärmetauschers 22 ermittelt und mit einem Grenzwert verglichen. Der Grenzwert liegt üblicherweise bei 5 bis 10°C. Wird der Grenzwert überschritten, so ist der Abtauvorgang abgeschlossen und der Abtau-Betrieb beendet, so dass wieder zum Heizbetrieb oder Reheat-Betrieb übergegangen werden kann.

Das Abtauverhalten wird gemäß dem Ausführungsbeispiel dadurch unterstützt, dass während des Abtau-Betriebes der durch den Außenwärmetauscher 22 strömende Luftstrom minimiert oder vollständig unterbunden wird. Um den Außenwärmetauscher möglichst schnell vom geschmolzenen Eis, d.h. vom Schmelzwasser, zu befreien, wird am Ende des Abtau-Betriebes kurzzeitig ein großer bis vorzugsweise der maximale Luftstrom über den Außenwärmetauscher 22 geleitet, damit das Schmelzwasser aus dem Außenwärmetauscher 22 herausgeblasen wird und ein vorzeitiges erneutes Vereisen verhindert werden kann.

Bevorzugt wird als Kältemittel CO₂ eingesetzt, da CO₂ gute thermodynamische Eigenschaften aufweist, die es für einen Wärmepumpenbetrieb geeignet machen. Bei Einsatz von CO₂ ist zur Leistungserhöhung ein innerer Wärmetauscher 42 vorgesehen, der einen Wärmetausch zwischen einem hochdruckseitigen Abschnitt (Leitung L₅) und einem niederdruckseitigen Abschnitt (Leitung L₇) bewirkt.

## Patentansprüche

1. Heiz-/Kühlkreislauf für ein Kraftfahrzeug mit einem Verdampfer (14) zur Abkühlung von einem Innenraum zuzuführender Luft, einem Heizwärmetauscher (16) zur Aufheizung der dem Innenraum zuzuführenden Luft, einem Außenwärmetauscher (22), mit einem Kompressor (24) zum Fördern von Kältemittel, einem ersten Expansionsorgan (28), das dem Verdampfer (14) zugeordnet ist, einem zweiten Expansionsorgan (30), das dem Außenwärmetauscher (22) zugeordnet ist und Kältemittelleitungen (L₁ bis L₁₂), über welche die vorgenannten Komponenten miteinander verbunden sind, **dadurch gekennzeichnet, dass** mittels einer absperrbare Heizbypassleitung (L₁₂) zur kältemittelseitigen Umgehung des Heizwärmetauschers (16) und einem absperrbaren Kühlbypassleitung (L₁₀) zur kältemittelseitigen Umgehung des Verdampfers (14) und des ersten Expansionsorgans (28) ein Abtau-Kreislauf schaltbar ist, der den Kompressor (24), den Außenwärmetauscher (22) und das zweite Expansionsorgan (30) umfasst und den Heizwärmetauscher (16), den Verdampfer (14) und das erste Expansionsorgan (28) umgeht.

2. Heiz-/Kühlkreislauf nach Anspruch 1, **dadurch gekennzeichnet, dass** das zweite Expansionsorgan (30) dem Kompressor (24) nachgeschaltet ist.

3. Heiz-/Kühlkreislauf nach Anspruch 1 oder 2, **dadurch gekennzeichnet, dass** das zweite Expansionsorgan (30) dem Außenwärmetauscher (22) vorgeschaltet ist.

4. Heiz-/Kühlkreislauf nach einem der vorhergehenden Ansprüche, **dadurch gekennzeichnet, dass** das zweite Expansionsorgan (30) regelbar ist.

5. Heiz-/Kühlkreislauf nach einem der vorhergehenden Ansprüche, **dadurch gekennzeichnet, dass** die Leistung des Kompressors (24) regelbar ist.

6. Heiz-/Kühlkreislauf nach einem der vorhergehenden Ansprüche, **dadurch gekennzeichnet, dass** ein Sensor in der Luft vor dem Außenwärmetauscher (22) vorgesehen ist.

7. Heiz-/Kühlkreislauf nach einem der vorhergehenden Ansprüche, **dadurch gekennzeichnet, dass** ein Sensor beim Kältemittel nach dem Außenwärmetauscher (22) vorgesehen ist.

8. Heiz-/Kühlkreislauf nach den Ansprüchen 6 und 7, **dadurch gekennzeichnet, dass** die Sensoren Temperatursensoren sind.

9. Heiz-/Kühlkreislauf nach Anspruch 7, **dadurch gekennzeichnet, dass** der Sensor ein Drucksensor ist, der niederdruckseitig nach dem Außenwärmetauscher (22) angeordnet ist.

10. Heiz-/Kühlkreislauf nach Anspruch 8, **dadurch gekennzeichnet, dass** eine Regelungsvorrichtung vorgesehen ist, die in Abhängigkeit von der mittels der Sensoren ermittelten Daten den Heiz-/Kühlkreislauf regelt.

11. Heiz-/Kühlkreislauf nach einem der vorhergehenden Ansprüche, **dadurch gekennzeichnet, dass** als Kältemittel CO₂ eingesetzt ist.

12. Heiz-/Kühlkreislauf nach einem der vorhergehenden Ansprüche, **dadurch gekennzeichnet, dass** eine absperrbare Heizbypassleitung (L₂) zur kältemittelseitigen Umgehung des Heizwärmetauschers (16) und des zweiten Expansionsorgans (30) vorgesehen ist.

13. Heiz-/Kühlkreislauf nach einem der vorhergehenden Ansprüche, **dadurch gekennzeichnet, dass** eine drosselbare Leitung (L₁₁) zwischen einer Verbindungsleitung zum Heizwärmetauscher (16) und einer Leitung oder Komponente auf niedrigem Systemdruck vorgesehen ist.

14. Klimaanlage eines Kraftfahrzeuges mit einem Heiz-/Kühlkreislauf (10) nach einem der vorhergehenden Ansprüche.

15. Verfahren zur Regelung einer Klimaanlage mit einem Heiz-/Kühlkreislauf mit einem Außenwärmetauscher (22), einem Kompressor (24) zum Fördern von Kältemittel einem Verdampfer (14), einem Heizwärmetauscher (16), einem ersten Expansionsorgan (28), das dem Verdampfer (14) zugeordnet ist, einem zweiten Expansionsorgan (30), das dem Außenwärmetauscher (22) zugeordnet ist und Kältemittelleitungen (L₁ bis L₁₂), über welche die vorgenannten Komponenten miteinander verbunden sind, wobei der Außenwärmetauscher (22) in einem Abtau-Betrieb vom umlaufenden Kältemittel geheizt wird, **dadurch gekennzeichnet, dass** im Abtau-Betrieb das Kältemittel im Kompressor (24) verdichtet, zum zweiten Expansionsorgan (30) geleitet und dort entspannt wird und seine Wärme im Außenwärmetauscher (22) abgibt, wobei die Wärme Eis, das sich am und/oder im Außenwärmetauscher (22) befindet, abtaut und wobei das Kältemittel den Verdampfer (14), das erste Expansionsorgan (28) und den Heizwärmetauscher (16) umgeht.

16. Verfahren nach Anspruch 15, **dadurch gekennzeichnet, dass** eine Temperaturdifferenz (T₁-T₂) zwischen einer Temperatur (T₁) der Luft und einer Temperatur (T₂) des Kältemittels am Austritt des Außenwärmetauschers (22) ermittelt wird und mit einem Schwellwert für die Temperaturdifferenz verglichen wird.

17. Verfahren nach Anspruch 16, **dadurch gekennzeichnet, dass** nach einem Überschreiten des Schwellwertes für die Temperaturdifferenz (T₁-T₂) die Klimaanlage in den Abtau-Betrieb geschaltet wird.

18. Verfahren nach einem der Ansprüche 15 bis 17, **dadurch gekennzeichnet, dass** während des Abtau-Betriebes eine Temperatur (T₂) des Kältemittels am Austritt des Außenwärmetauschers (22) ermittelt wird und mit einem Schwellwert für die Temperatur (T₂) des Kältemittels am Austritt des Außenwärmetauschers (22) verglichen wird und bei Überschreiten des Schwellwertes der Abtau-Betrieb beendet wird.

19. Verfahren nach einem der Ansprüche 15 bis 18, **dadurch gekennzeichnet, dass** während des Abtau-Betriebes keine oder nur minimal Luft über den Außenwärmetauscher (22) geleitet wird.

20. Verfahren nach einem der Ansprüche 15 bis 19, **dadurch gekennzeichnet, dass** beim oder nach dem Beenden des Abtau-Betriebes ein großer bis maximaler Luftstrom über den Wärmetauscher (22) geleitet wird.

## Claims

1. A heating/cooling circuit for a motor vehicle having an evaporator (14) for cooling air to be delivered to an inner chamber, a heat exchanger (16) for heating air to be delivered to the inner chamber, an external heat exchanger (22), a compressor (24) for conveying refrigerant, a first expansion device (28) which is associated with the evaporator (14), a second expansion device (30) which is associated with the external heat exchanger (22) and refrigerant lines (L₁ to L₁₂) by which the aforementioned components are connected together,
**characterised in that**
by means of a blockable heat bypass line (L₁₂) which enables the refrigerant to bypass the heat exchanger (16) and a blockable heat bypass line (L₁₀) which enables the refrigerant to bypass the evaporator (14) and the first expansion device (28) it is possible to connect a defrosting circuit which comprises the compressor (24), the external heat exchanger (22) and the second expansion device (30) and which bypasses the heat exchanger (16), the evaporator (14) and the first expansion device (28).

2. A heating/cooling circuit in accordance with claim 1,
**characterised in that**
the second expansion device (30) is connected downstream of the compressor (24).

3. A heating/cooling circuit in accordance with claim 1 or 2,
**characterised in that**
the second expansion device (30) is connected upstream of the external heat exchanger (22).

4. A heating/cooling circuit in accordance with one of the preceding claims,
**characterised in that**
the second expansion device (30) is adjustable.

5. A heating/cooling circuit in accordance with one of the preceding claims,
**characterised in that**
the output of the compressor (24) is adjustable.

6. A heating/cooling circuit in accordance with one of the preceding claims,
**characterised in that**
a sensor is provided in the air upstream of the external heat exchanger (22).

7. A heating/cooling circuit in accordance with one of the preceding claims,
**characterised in that**
a sensor is provided for the refrigerant downstream of the external heat exchanger (22).

8. A heating/cooling circuit in accordance with claims 6 and 7,
**characterised in that**
the sensors are temperature sensors.

9. A heating/cooling circuit in accordance with claim 7,
**characterised in that**
the sensor is a pressure sensor which is positioned on the low pressure side downstream of the external heat exchanger (22).

10. A heating/cooling circuit in accordance with claim 8,
**characterised in that**
an adjusting device which regulates the heating/cooling circuit dependent on the data captured by means of the sensors is provided.

11. A heating/cooling circuit in accordance with one of the preceding claims,
**characterised in that**
the refrigerant is CO₂.

12. A heating/cooling circuit in accordance with one of the preceding claims,
**characterised in that**
a blockable heat bypass line (L₂) which enables the refrigerant to bypass the heat exchanger (16) and the second expansion device (30) is provided.

13. A heating/cooling circuit in accordance with one of the preceding claims,
**characterised in that**
a throttleable line (L₁₁) is provided between a connecting line to the heat exchanger (16) and a line or components at low system pressure.

14. An air conditioning system in a motor vehicle with a heating/cooling circuit (10) in accordance with one of the preceding claims.

15. A process for the adjustment of an air conditioning system with a heating/cooling circuit having an external heat exchanger (22), a compressor (24) for conveying refrigerant, an evaporator (14), a heat exchanger (16), a first expansion device (28) which is associated with the evaporator (14), a second expansion device (30) which is associated with the external heat exchanger (22) and refrigerant lines (L₁ to L₁₂) by which the aforementioned components are connected together, the external heat exchanger (22) being heated by circulating refrigerant in a defrosting mode,
**characterised in that**
in defrosting mode the refrigerant is compressed in the compressor (24) and conveyed to the second expansion device (30) where it expands and conveys heat to the external heat exchanger (22), the heat defrosting ice located on and/or in the external heat exchanger (22), and the refrigerant bypassing the evaporator (14), the first expansion device (28) and the heat exchanger (16).

16. A process in accordance with claim 15,
**characterised in that**
a temperature differential (T₁-T₂) between an air temperature (T₁) and a refrigerant temperature (T₂) is determined at the outlet of the external heat exchanger (22) and compared with a threshold value for the temperature differential.

17. A process in accordance with claim 16,
**characterised in that**
the air conditioning system switches to defrosting mode if the threshold value for the temperature differential (T₁-T₂) is exceeded.

18. A process in accordance with one of claims 15 to 17,
**characterised in that**
in defrosting mode a refrigerant temperature (T₂) is captured at the outlet of the external heat exchanger (22) and compared with a threshold value for the refrigerant temperature (T₂) at the outlet of the external heat exchanger (22), and defrosting mode is ended when the threshold value is exceeded.

19. A process in accordance with one of claims 15 to 18,
**characterised in that**
in defrosting mode no or only minimal air is conveyed through the external heat exchanger (22).

20. A process in accordance with one of claims 15 to 19,
**characterised in that**
at or after the end of defrosting mode a high to maximum air flow is conveyed through the external heat exchanger (22).

## Revendications

1. Circuit de chauffage/refroidissement pour une automobile comportant un évaporateur (14) permettant de refroidir l'air à amener dans un habitacle, un échangeur thermique de chauffage (16) servant à réchauffer l'air à amener dans l'habitacle, un échangeur thermique extérieur (22), avec un compresseur (24) permettant d'acheminer un produit réfrigérant, un premier organe d'expansion (28), qui est associé à l'évaporateur (14), un deuxième organe d'expansion (30), qui est associé à l'échangeur thermique extérieur (22) et des conduites de produit réfrigérant (L₁ à L₁₂), par le biais desquelles les composants susmentionnés sont reliés les uns aux autres, **caractérisé en ce qu'**un circuit de dégivrage peut être commuté au moyen d'une conduite de dérivation de chauffage (L₁₂) pouvant être fermée permettant le contournement côté produit réfrigérant de l'échangeur thermique de chauffage (16) et une conduite de dérivation de refroidissement (L₁₀) pouvant être fermée permettant le contournement côté produit réfrigérant de l'évaporateur (14) et du premier organe d'expansion (28), lequel circuit de dégivrage comprend le compresseur (24), l'échangeur thermique extérieur (22) et le deuxième organe d'expansion (30) et contourne l'échangeur thermique de chauffage (16), l'évaporateur (14) et le premier organe d'expansion (28).

2. Circuit de chauffage/refroidissement selon la revendication 1, **caractérisé en ce que** le deuxième organe d'expansion (30) est placé en aval du compresseur (24).

3. Circuit de chauffage/refroidissement selon la revendication 1 ou 2, **caractérisé en ce que** le deuxième organe d'expansion (30) est placé en amont de l'échangeur thermique extérieur (22).

4. Circuit de chauffage/refroidissement selon l'une quelconque des revendications précédentes, **caractérisé en ce que** le deuxième organe d'expansion (30) peut être réglé.

5. Circuit de chauffage/refroidissement selon l'une quelconque des revendications précédentes, **caractérisé en ce que** la puissance du compresseur (24) peut être réglée.

6. Circuit de chauffage/refroidissement selon l'une quelconque des revendications précédentes, **caractérisé en ce qu'**un capteur est prévu dans l'air en amont de l'échangeur thermique extérieur (22).

7. Circuit de chauffage/refroidissement selon l'une quelconque des revendications précédentes, **caractérisé en ce qu'**un capteur est prévu au niveau du produit réfrigérant après l'échangeur thermique extérieur (22).

8. Circuit de chauffage/refroidissement selon les revendications 6 et 7, **caractérisé en ce que** les capteurs sont des capteurs de température.

9. Circuit de chauffage/refroidissement selon la revendication 7, **caractérisé en ce que** le capteur est un capteur de pression, qui est disposé côté basse pression après l'échangeur thermique extérieur (22).

10. Circuit de chauffage/refroidissement selon la revendication 8, **caractérisé en ce qu'**un dispositif de réglage est prévu qui règle le circuit de chauffage/refroidissement en fonction des données déterminées à l'aide des capteurs.

11. Circuit de chauffage/refroidissement selon l'une quelconque des revendications précédentes, **caractérisé en ce qu'**on utilise du CO₂ comme produit réfrigérant.

12. Circuit de chauffage/refroidissement selon l'une quelconque des revendications précédentes, **caractérisé en ce qu'**une conduite de dérivation de chauffage (L₂) pouvant être fermée permettant le contournement côté produit réfrigérant de l'échangeur thermique de chauffage (16) et du deuxième organe d'expansion (30) est prévue.

13. Circuit de chauffage/refroidissement selon l'une quelconque des revendications précédentes, **caractérisé en ce qu'**une conduite étranglable (L₁₁) est prévue entre une conduite de raccordement à l'échangeur thermique de chauffage (16) et une conduite ou des composants à faible pression de système.

14. Climatiseur d'une automobile avec un circuit de chauffage/refroidissement (10) selon l'une quelconque des revendications précédentes.

15. Procédé de réglage d'un climatiseur avec un circuit de chauffage/refroidissement comportant un échangeur thermique extérieur (22), un compresseur (24) permettant d'acheminer un produit réfrigérant à un évaporateur (14), un échangeur thermique de chauffage (16), un premier organe d'expansion (28), qui est associé à l'évaporateur (14), un deuxième organe d'expansion (30), qui est associé à l'échangeur thermique extérieur (22) et des conduites de produit réfrigérant (L₁ à L₁₂), par le biais desquelles les composants mentionnés précédemment sont reliés les uns aux autres, dans lequel l'échangeur thermique extérieur (22) est chauffé en un mode dégivrage par un produit réfrigérant circulant, **caractérisé en ce qu'**en mode dégivrage le produit réfrigérant se condense dans le compresseur (24), est conduit au deuxième organe d'expansion (30) et là est détendu et dégage sa chaleur dans l'échangeur thermique extérieur (22), dans lequel la chaleur dégivre la glace, qui se trouve sur et/ou dans l'échangeur thermique extérieur (22), et dans lequel le produit réfrigérant contourne l'évaporateur (14), le premier organe d'expansion (28) et l'échangeur thermique de chauffage (16).

16. Procédé selon la revendication 15, **caractérisé en ce qu'**une différence de température (T₁ à T₂) entre une température (T₁) de l'air et une température (T₂) du produit réfrigérant à la sortie de l'échangeur thermique extérieur (22) est déterminée et comparée à une valeur seuil pour la différence de température.

17. Procédé selon la revendication 16, **caractérisé en ce que**, après un dépassement de la valeur seuil pour la différence de température (T₁ à T₂), le climatiseur passe en mode dégivrage.

18. Procédé selon l'une quelconque des revendications 15 à 17, **caractérisé en ce que** pendant le mode dégivrage une température (T₂) du produit réfrigérant est déterminée à la sortie de l'échangeur thermique extérieur (22) et comparée à une valeur seuil pour la température (T₂) du produit réfrigérant à la sortie de l'échangeur thermique extérieur (22) et en cas de dépassement de la valeur seuil, le mode dégivrage est arrêté.

19. Procédé selon l'une quelconque des revendications 15 à 18, **caractérisé en ce que** pendant le mode dégivrage aucune ou seulement une quantité infime d'air est conduite par le biais de l'échangeur thermique extérieur (22).

20. Procédé selon l'une quelconque des revendications 15 à 19, **caractérisé en ce que** lors de l'arrêt ou après l'arrêt du mode dégivrage un écoulement d'air important jusque maximal est conduit par le biais de l'échangeur thermique (22).
